# EUROPEAN PATENT SPECIFICATION

(11) **EP 0 609 367 B1**
(45) Date of publication and mention of the grant of the patent: **14.08.1996**
(21) Application number: 92922803.9
(22) Date of filing: 16.10.1992
(51) Int. Cl.: A47J 31/06

(54) **FILTER ELEMENT**
FILTERELEMENT
ELEMENT FILTRANT

(30) Priority: 17.10.1991 DK 1751/91
(43) Date of publication of application: 10.08.1994
(73) Proprietor: UNIGREEN INTERNATIONAL A/S, DK-2950 Vedbaek (DK)
(72) Inventor: VANGEDAL-NIELSEN, Erling, DK-2950 Vedbaek (DK)
(74) Representative: Nielsen, Henrik Sten
(86) International application number: DK9200305
(87) International publication number: WO9307791

(56) References cited:
- DE-A- 2 034 309
- DE-A- 2 758 752
- DE-C- 3 202 386

## Description

The present invention relates to a filter element to be used in the preparation of extraction drinks, such as coffee and the like.

A filter element comprising a filter body of essentially conical form and being open at the widest end of the filter element, which filter element is designed to be received within and supported by a funnel-shaped holder is a commonly used domestic article for the preparation of coffee, especially in so-called coffee urns. The commonly used filter element is prepared from paper material and is a disposable filter element. The prior art filter element is marketed in different sizes intended to be used in corresponding standardized funnel-shaped holders. The filter elements of different sizes are marketed as coffee filters supplied with a number specifying the size of the relevant filter element which size corresponds to the funnel-shaped holder in connection with which the relevant numbered filter element is to be used.

The prior art disposable filter element prepared from paper material has obtained a very wide market distribution in spite of the fact that accidents often occur in private households in connection with the use of the filter element, and accidents often occur when the filter element immediately after use is to be emptied out into a dustbin, which can only take place in such a way that the filter element is thrown out of the funnel-shaped holder and into the dustbin. During this operation a very inconvenient accident can take place in that the filter element is stuck in the funnel-shaped holder or rather is partly stuck in the funnel-shaped holder so that the user's attempt to throw the used filter element with the used coffee beans into the dustbin results in that the filter element and the hot coffee beans contained in the filter element are flung on the user's hand and the result is a scalding.

Another essential disadvantage of the prior art filter element is that the prior art filter element cannot readily be modified in such a way that it, by choosing another fluid-permeable foil material, can be modified from a disposable filter element to a filter element which in a easy and rational way can be cleaned and thereupon reused.

DE-A-2 034 309 discloses a filter element to be used in the preparation of extraction of drinks and prepared from a fluid permeable material, said filter element comprising a filter body of essentially conical form and being open at its widest end, said filter element being received within a funnel shaped holder.

The object of the present invention is to provide a filter element, which filter element on one hand, provided the filter element is prepared from paper material and therefore intended to be disposable, enables the user in a safe and reliable way to move the used filter element from the funnel-shaped holder to the dustbin without the risk of being scalded or burned, and on the other hand, provided the filter element is prepared from a durable fluid-permeable foil materiale, such as a fluid-permeable polymeric material, is adapted to be emptied and then cleaned so that the filter element may be reused after cleaning.

The above object is achieved in accordance with the present invention by a filter element comprising a filter body of essentially conical form and being open at the widest end of said filter body, said filter element being designed to be received within and supported by a funnel-shaped holder, a flap-shaped part projecting from said filter body, said flap-shaped part constituting an extension of said filter body at the end of said filter body being opposite said widest end, said flap-shaped part constituting a tubular or funnel-shaped part being open at both ends, and said flap-shaped part having dimensions so that a person after using said filter element may grip said flap-shaped part and in a safe manner hold said filter element when it is removed from said funnel-shaped holder.

The flap-shaped part of the filter element according to the present invention projecting from the end of the filter body opposite said widest end and constituting a tubular or funnel-shaped part being open at both ends makes it possible that the filter element be rinsed or cleaned after use, by carrying out a "reverse rinsing" of the filter element, i.e. a rinsing of the filter element in a direction opposite the direction in which the fluid is lead through the filter element during the preparation of the extraction drink, as rinsing water is introduced through the tubular or funnel-shaped part, or instead carrying out by introducing rinsing water through said widest end of the filter element, said rinsing water then being emptied out through the tubular or funnel-shaped part. During use of the filter element according to the present the invention the tubular or funnel-shaped part is folded at the passage or junction between the filter body of the filter element and the tubular or funnel-shaped part of the filter element in order to close the filter body at the relevant passage.

Depending on whether the fluid-permeable foil material from which the filter element is prepared, sucks liquid or not, the characteristic projecting flap-shaped parts according to the invention have larger or smaller dimensions to ensure that no hot water is sucked through the material of the filter element into the projecting flap-shaped part which therefore will be heated and thus be difficult to grip by a person who is to remove the filter element from the funnel-shaped holder after use prior to letting the filter element and the coffe beans contained in the filter body of the filter element cool off.

In accordance with the invention a further flap-shaped part may be provided projecting from the filter element at any place, however, in accordance with one advantageous embodiment of the filter element according to the present invention projecting from the filter body at said widest end of said filter body, i.e. from that end of the filter body which, when the filter element is received within and supported by the funnel-shaped holder, is placed at the opening of the funnel-shaped holder facing upwards, through which opening water is supplied, such as hot or even boiling water, to the materiel, such as coffee beans, contained in the filter body of the filter element.

In order to ensure that the person, who is to remove the filter element from the funnel-shaped holder after using the filter element, may handle the filter element without tilting it and thereby dropping it or even being exposed to the risk of scalding, the above described, advantageous embodiment of the filter element accoding to the invention is preferably provided with two, preferably symmetrically placed, flap-shaped parts projecting from the filter element at said widest end of the filter body.

Preferably, the tubular or funnel-shaped part has a length or height being larger than the height of the conically shaped filter body. Alternatively, the tubular or funnel-shaped part may have a length or height being smaller that the height of the conically shaped filter body.

The filter element according to the present invention may be prepared in any arbitrary way from fluid-permeable foil material ; thus, the filter element according to the invention may be formed with a conically shaped filter body prepared from a single foil sheet from which a piece of sheet material is cut or punched, which piece of material in a single joint or weld is conically shaped. Like the prior art disposable filter element prepared from paper material the filter element according to the present invention is preferably collapsible and in a collapsed state forms a basically planar structure so that the filter element in said collapsed state may be packed in a space-saving way in an individual packaging or a packaging containing a number of individual filter elements. By the forming of the filter element according to the invention being a collapsible filter element it is also possible, provided the filter element is adapted to be reused, to store the filter element in a collapsed state and thereby in a very space-saving state.

In the presently preferred embodiment of the filter element according to the present invention the filter element is formed as a collapsible filter element and composed of two pieces of sheet material of which at least one of the pieces of sheet material is of a fluid-permeable sheet material , and the pieces of sheet material are joined together along a part of the edges. In the preferred embodiment of the filter element according to the invention both pieces of sheet materiel are fluid-permeable, and they may be of different stiffness and composed of different materials. However, it is preferred that the same material is used for the two pieces of sheet material in the filter element.

Provided the filter element according to the present invention is a disposable filter element the pieces of sheet material are preferably prepared from paper material, whereas the pieces of sheet material, provided the filter element according to the invention is adapted to be reused, are preferably prepared from non-woven plastics or polymeric material or alternatively from melt-blown plastics or polymeric material. The used plastics or polymeric material may be of woven or non-woven material or constitute a composite material comprising e.g. non-woven material and melt-blown material or woven or non-woven material.

In order to ensure that the filter element according to the present invention, provided the filter element is intended or adapted to be reused, has a stiffness preventing the filter element from "collapsing" during use, said edge joints may serve to increase the stiffness of the filter element, or the filter body of the filter element may in stead or additionally be provided with strengthening ribs serving to increase the stiffness of the filter element.

Below a detailed discussion of advantageous and presently preferred embodiments of the filter element according to the present invention will be discussed disclosing a number of specific and characteristic features. However, said specific and characteristic features may, in a present context, i.e. in addition to the specific embodiment, be combined with other features, said combinations also being comprised by the sole and exclusive right defined in the below claims.

The invention is now to be further described with reference to the drawings, in which
Fig. 1 is a perspective view of a presently preferred, first embodiment of a filter element according to the present invention,
Fig. 2 is a schematical and perspective view of the first embodiment of the filter element according to the present invention shown in Fig. 1, during arranging the filter element in a funnel-shaped holder which supports the filter element during use, i.e. during the preparation of extraction drinks,
Fig. 3 is a schematical and perspective view of the first embodiment of the filter element according to the present invention shown in Figs. 1 and 2, during the cleaning of the filter element after use,
Figs. 4, 5 and 6, respectively, are schematical views similar to Fig. 1 of a second, third and fourth embodiment of a filter element according to the present invention,
Figs. 7 and 8 are schematical views of foil sheets from which a fifth and sixth embodiment, respectively, of the filter element according to the present invention are prepared,
Fig. 9 is a schematical view of a seventh embodiment of a filter element according to the present invention,
Fig. 10 is a schematical view of the seventh embodiment of the filter element according to the invention also shown in Fig. 9 while being prepared for use,
Fig. 11 is a schematical view of an eighth embodiment of the filter element according to the present invention,
Fig. 12 is a schematical view of a ninth embodiment of the filter element according to the present invention, and
Fig. 13 is a schematical view of a tenth embodiment of the filter element according to the present invention.

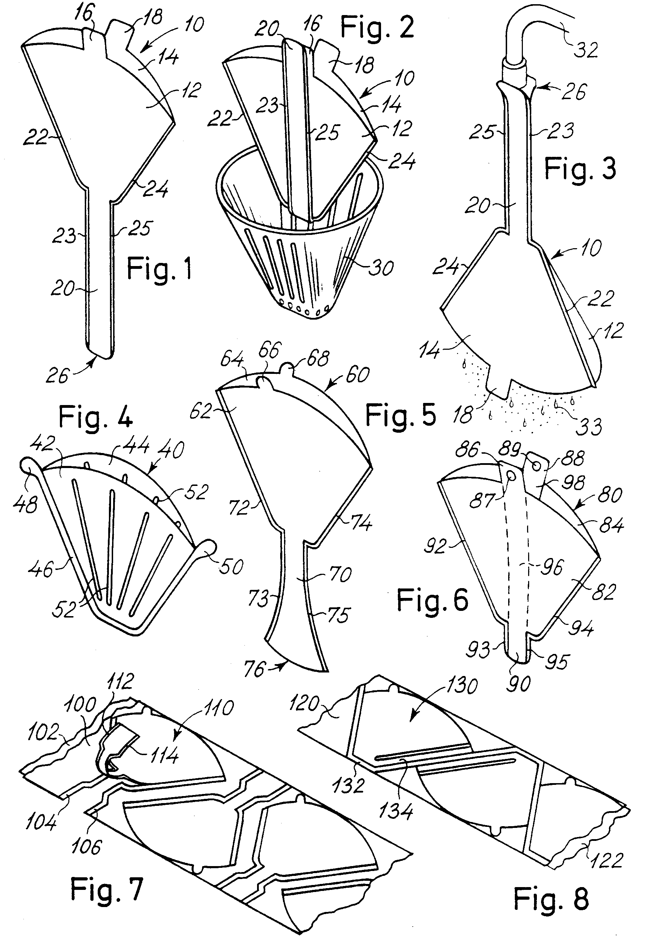

In Figs. 1, 2 and 3, a first, presently preferred, embodiment of a filter element according to the invention to be used in the preparation of extraction drinks, such as coffee, is shown. The first embodiment of the filter element is designated the reference numeral 10 in its entirety. The filter element 10 is prepared from two sheets of foil material, which sheets, as will be explained below with reference to Figs. 7 and 8, are simultaneously subjected to embossing or cutting and joining of the two sheets by gluing, welding, sewing or any other equivalent technique for the preparation of the filter element. The two sheets of foil material may be identical or different. The material may be a paper based material or a polymeric material. Provided a paper material is used the filter element 10 is preferably a disposable filter element. An impregnated paper material, however, makes it possible to clean the filter element prepared from one such impregnated paper material, as will be explained below with reference to Fig. 3, and to reuse the filter element. Provided the filter element 10 is prepared from two identical sheets, both sheets are prepared from a fluid-permeable material, irrespective of the material being a paper or polymer based material. Provided the two sheets from which the filter element 10 is prepared are different, only one of the sheets of material may be prepared from a fluid-permeable material, whereas the other sheet of material may be prepared from a fluid-impermeable material and may e.g. be prepared from a stronger material serving the purpose of increasing the stiffness of the finished filter element 10. The presently preferred material is a non-woven polymeric material, preferably polypropylene or alternatively Nylon®, polyester or a similar polymeric material. An alternative advantageous material is melt-blown polymeric material, preferably polypropylene material, just as composite material comprising non-woven polymeric material and melt-blown polymeric material, preferably non-woven polypropylene and melt-blown polypropylene may be used for the filter element according to the invention, both in the first embodiment shown in Figs. 1-3 and in the alternative embodiments of the filter element according to the invention shown in Figs. 4-6 and 9-12. In the below examples advantageous alternatives of said materials are discussed which materials have been used or may advantageously be used for the preparation of the filter element according to the invention.

The filter element 10 shown in Figs. 1-3 comprises two identical halves, i.e. two foils being designated the reference numerals 12 and 14, respectively. The foils 12 and 14 are joined together along the edges by way of joints, preferably welds, being designated the reference numerals 22-25. The two joints 22 and 24 form an upper triangular part of the filter element, which part constitutes the filter body of the filter element, i.e. the part of the filter element which during use implements the filtration function in the preparation of extraction drinks. With reference to its function during use this part or this filter body essentially corresponds to a conventional disposable coffee filter prepared from paper material. The two joints or welds 23 and 25 form an elongated tubular part 20, which is open at its lowermost end being designated the reference numeral 26. From the interior of the filter element 10, i.e. from the interior of the filter body, communication is established to the surroundings through the tubular part 20. Besides, just like a conventional disposable coffee filter prepared from paper material, the filter element 10 is open at its upper end, the first embodiment of the filter element according to the invention shown in Figs. 1-3, however, differing from the conventional disposable coffee filter in that flap-shaped catch-flanges 16 and 18 project upwardly from the two foils 12 and 14. The flap-shaped flanges 16 and 18 primarily serve to enable a person using the filter element 10 to handle and in a safe way to grip the filter element after use.

As shown in Fig. 2 the filter element 10 is used in a conventional filter holder or filter funnel 30, the tubular part 20 immediately prior to use being folded at the passage between the filter body and the tubular part or at the junction between the joints or welds 22, 24 and 23, 25 so that the outermost end of the tubular part 20 after folding is positioned adjacent to the flap-shaped flanges 16 and 18 projecting upwardly. Hereby the communication from the interior of the filter element or from the interior of the filter body through the tubular part is disconnected or closed. Thereupon, as shown in fig. 2, the filter element 10 is placed in the filter holder or filter funnel 30. The flap-shaped parts 16 and 18 are separated, and the material, preferably crushed coffe beans, from which it is desireable to make an extractioon drink, is placed in the interior of the filter body. When the extraction drink has been prepared, or, more usual, when the coffee has been brewed, said coffee brewing being carried out on a conventional coffee urn, the filter element 10 is removed from the filter holder 30 while the material contained in the filter body, i.e. the crushed coffee beans, are still hot, as the person preparing the extraction drink or brewing the coffe, grips the two projecting flap-shaped flanges 16 and 18 between the index-finger and thumb of each hand in such as way that the outermost end of the folded tubular part 20 is positioned adjacent to and abatting the flap-shaped flange 16. The contents of the filter element 10 may hereafter be emptied from the interior of the filter body by turning the filter element 10 upside down over a dustbin, the filter element being turned upside down and being kept at the lower part of the tubular part 20 by the person emptying the filter element 10. Hereafter the filter element may be shaken so as to shake loose any residue of material or coffee beans pasted to the inner wall of the foils 12 and 14.

After emptying out said material or said coffee beans from the filter body, the filter element 10 may be rinsed by rinsing the filter body or the interior of the filter body from the uppermost end of the filter element or as shown in Fig. 3, from the lowermost end of the filter element.

In Fig. 3, the rinsing is carried out through the lowermost open end 26 of the tubular part 20 by placing the lowermost open end 26 of the tubular part 20 around the spout of a tap 32 and letting water from said tap run through the tubular part 20 and further out through the filter body of the filter element 10, as the filter element 10 is being kept upside down in relation to the normal orientation of the filter element during use. In Fig. 3, drops of water liberated from the open end of the filter body, which normally turns upwardly, are designated the reference numeral 33.

It is to be pointed out that the flap-shaped flanges 16 and 18 apart from enabling the handling of the filter element 10 after use, and of course also before use, may serve the further purpose of providing a fixation of the filter element 10 in the filter holder or filter funnel 30, as the projecting flap-shaped flanges 16 and 18 may be folded around the upper edge of the filter holder 30 and optionally be wedged between said upper edge of the filter holder 30 and a lid which in a coffee urn during the process in which the extraction drink is prepared, i.e. during the coffee brewing process, is mounted on the filter holder or filter funnel 30.

Fig. 4 shows a second embodiment of the filter element according to the present invention. The second embodiment shown in fig. 4 is designated the reference numeral 40 in its entirety and differs from the first embodiment 10 shown in Figs. 1-3 by not including a tubular part corresponding to the tubular part 20 of the filter element according to the first embodiment. Furthermore, as far as the flap-shaped flanges 16 and 18 of the first embodiment 10 shown in Figs. 1-3 are concerned, the second embodiment 40 is provided with corresponding projecting flap-shaped parts at a different place as compared to the central, symmetrical arrangement of the flap-shaped flanges or flaps 16 and 18 of the first embodiment 10. The filter element 40 comprises two foils 42 and 44 being joined together along the edge by way of a single joint or weld 46 forming a filter element or filter body of essentially triangular form corresponding to a conventional disposable coffee filter prepared from paper material. The embodiment shown in Fig. 4 of the filter element according to the present invention, however, differs from a conventional disposable coffee filter prepared from paper material by having a particularly wide joint or weld 46, thus providing the filter element 40 with great stiffness, just as said joint or weld 46 at its uppermost ends form planar, projecting flap-shaped parts 48 and 50 serving the purpose of enabling a person using the filter element 40 to handle the filter element in essentially the same way as described above with reference to fig. 2. To increase the stiffness of the filter element 40 one or both of the foils 42 and 44 are furthermore, provided with strengthening ribs 52, which, provided the filter element is prepared from polymeric material, preferably non-woven or melt-blown polymeric material such as non-woven or melt-blown polypropylene material, may be prepared by welding the foil material in coherent ribbons. It is to be pointed out that the feature described above with reference to fig. 4 serving the purpose of increasing the stiffness of the filter element, i.e. providing wide joints or welds and strengthen-ing ribs, may also be provided in the first embodiment shown in Figs. 1-3. The ribs 52 may further serve the purpose of reducing the permability of the foils 42 and 44. Similar permeability reducing areas or segments may be provided in the foils 12 and 14 of the embodiment 10 described above with reference to Figs. 1-3.

Fig. 5 shows a third embodiment of the filter element according to the present invention, said third embodiment being designated the reference numeral 60 in its entirety. The third embodiment shown in Fig. 5 corresponds to a large extent to the first embodiment of the filter element according to the invention described above with reference to Figs. 1-3. Thus, the filter element 60 has two foils 62 and 64 corresponding to the foils 12 and 14 shown in Fig. 1, said foils 62 and 64 being joined together or welded together by way of joints or welds 72-75. The joints or welds 72 and 74 form a triangular part or a triangularly shaped filter body corresponding to the filter body formed in the filter element 10. Whereas the first embodiment of the filter element has a tubular part 20, the third embodiment 60 shown in Fig. 5 has a funnel-shaped part 70 formed by the joints or welds 73 and 75. Said funnel-shaped part 70 primarily serves to ease the operation shown in Fig. 3, viz. the operation of rinsing the filter element through the lowermost open end 76 of the funnel-shaped part 70.

Whereas the first embodiment 10 shown in Fig. 1 has projecting flap-shaped catch flanges 16 and 18, the third embodiment 60 shown in Fig. 5 only has smaller, asymmetrically placed flanges 66 and 68, which merely serve the, same purpose as corresponding flanges of a conventional disposable coffee filter prepared from paper material, viz. to make it easier to separate the foils from each other prior to placing the filter element in a filter holder or filter funnel, like the filter holder or filter funnel 30 shown in Fig. 2. However, the flanges 66 and 68 which are relatively small as compared to the projecting flap-shaped catch-flanges 16 and 18 do not enable a person to grip these flaps after using the filter element for the preparation of an extraction drink, for which reason the emptying of the filter element shown in Fig. 5 after use is carried out by gripping the filter element at the open end 76 of the funnel-shaped part 70, only.

Fig. 6 shows a fourth embodiment of the filter element according to the present invention, said filter element being designated the reference numeral 80 in its entirety. The filter element 80 comprises two foils 82 and 84 which may be prepared from paper material or preferably polymeric material, preferably the above-mentioned non-woven or melt-blown polymeric material. The foils 82 and 84 are like the foils 12 and 14 shown in Fig. 1, joined together forming an essentially triangular configuration by way of joints or welds 92 and 94. The joints 92 and 94 shown in Fig. 6 serve the same purpose as the joint or weld 46 shown in Fig. 4, viz. to provide the filter element 80 with considerable stiffness. To increase the stiffness of the filter element strengthening ribbons 96 and 98 composed of ribbons of the same material as the foil material in the foils 82 and 84 are provided which ribbons are joined together or welded to the foils 82 and 84, respectively. The strengthening ribbons 96 and 98 extend upwardly and congruently with projecting flap-shaped catch-flanges 86 and 88 corresponding to the catch-flanges 16 and 18 shown in Fig. 1, said flanges 86 and 88, however, unlike the above mentioned projecting flap-shaped flanges or gripping parts being provided with continuous holes 87 and 89, respectively, the purpose og which is to enable a handing-up of the filter element 80 on e.g. a nail or a screw after use and cleaning. The strengthening ribbons 96 and 98 extend downwardly and congruently with and out through a projecting tubular part 90 being formed by joints or welds 93 and 95 of both the foils 82 and 84 and the strengthening ribbons 96 and 98. The tubular part 90 is open at its lower end, but differs from the tubular part 20 shown in Fig. 2 by having a length which is essentially smaller than the height of the triangular filter body formed of the filter element 80, whereas the tubular part 20 shown in Fig. 1, as stated above with reference to Fig. 2, has a length which is larger than the height of the triangular filter body of the filter element 10, enabling the outermost open end 26 of the tubular part 20 to extend beyond the uppermost edge of the filter element in the folded state as shown in Fig. 2.

Fig. 7 is a schematical view of the preparation of a fifth embodiment of a filter element according to the present invention. Thus, Fig. 7 shows two continuous foil sheets 100 and 102 joined together or welded together forming the joints 112 and 114 of the filter element, which in said fifth embodiment is designated the reference numeral 110 in its entirety. Simultaneously with the formation of the joints 112 and 114 the remaining parts of the foil sheets being designated the reference numerals 104 and 106 are joined together or welded together, the joining of the foil sheets forming the individual filter element being carried out by way of an embosser or heater tool, which in one operation melts the two continuous foil sheets 100 and 102 together and forms a notch in the joint, said notch serving to enable a separation of the finished filter element from the joined continuous sheets. Incidentally, the fifth embodiment of the filter element according to the present invention shown in Fig. 7 corresponds essentially to the above third embodiment of a filter element according to the invention shown in Fig. 5.

Fig. 8 is a schematical view of a sixth embodiment of a filter element according to the invention, said sixth embodiment being designated the reference numeral 130 in its entirety and being prepared by a technique corresponding to the technique described above with reference to Fig. 7 by which technique the individual filter element is prepared by joining together or welding together the two opposite, identical or different foil sheets, preferably polymeric sheets, one of the sheets or the upper foil sheet being designated the reference numeral 120, and the other sheet or lower foil sheet being designated the reference numeral 122.

The embodiment of the filter element shown in Fig. 8 generally has a triangular form prepared from a single joint 132 corresponding to the joint or weld 46 shown in Fig. 4. However, the sixth embodiment of the filter element according to the present invention shown in Fig. 8 differs from the second embodiment of a filter element according to the invention described above with reference to Fig. 4 by the filter element 130 shown in Fig. 8 having a delimited channel 134 within the continuous joint or weld 132, said delimited channel being separated from the filter body of the filter element 130, and being folded from the position shown in Fig. 8 so as to form a downwardly projecting, open, tubular channel in the normal service position of the filter element. Thus, said tubular part 134 makes it possible to rinse the filter body of the filter element 130 after use as water may be lead down through the tubular part 134 during the rinsing operation.

In comparison with the fifth embodiment of a filter element according to the invention shown in Fig. 7, the embodiment shown in Fig. 8 further has the essential advantage that the amount of material used for the individual filter element is smaller, resulting from the geometrical form of the individual filter element, and the amount of wasted material in connection with the preparation or the production of the embodiment shown in Fig. 8 is consequently small.

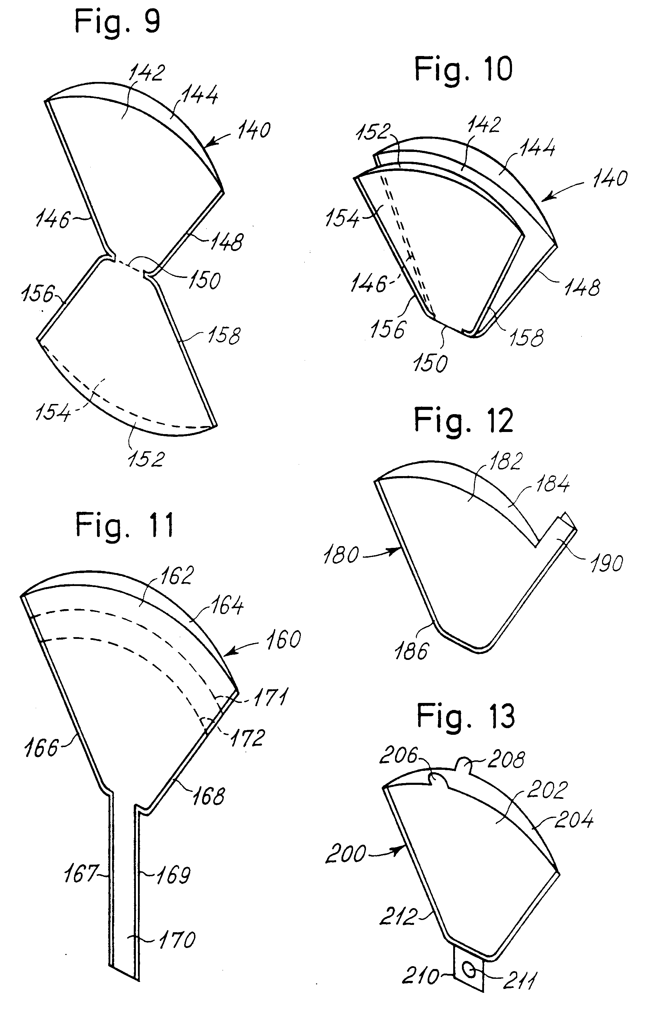

Figs. 9 and 10 are schematical and perspective views of a seventh embodiment of the filter element according to the present invention, said embodiment being designated the reference numeral 140 in its entirety. The seventh embodiment of the filter element according to the present invention shown in Figs. 9 and 10, so to speak constitutes a double filter, the filter element consisting of two halves each comprising two foils 142, 144 and 152, 154, respectively. The first half of the filter element 140 comprising the foils 142 and 144 forms a triangular filter body corresponding to the filter body of the filter element 10 shown in Fig. 1. The foils 142 and 144 are joined together or welded together through joints or welds 146 and 148, and the second half of the filter element 140 comprising the foils 152 and 154 are joined or welded together through joints or welds 156 and 158. A folding line or a separate joint or weld 150 is provided between the two halves of the filter element 140 separating the two filter halves of the filter element.

During use, the two filter halves of the filter element 140 are folded relative to one another along the folding line or joint 150, whereupon one filter half of the filter element is used as a filter body or a filter corresponding to e.g. the filter element 10 described above with reference to Figs. 1-3, and the second filter half of the filter element 140 is used as a projecting flap-shaped catch-flange serving the same purpose as e.g. the tubular part 20 shown in fig. 1.

The seventh embodiment of the filter element according to the present invention shown in Figs. 9 and 10 may of course be modified in numerous ways. Thus, one of the two filter halves or both filter halves of the filter element may be provided with strengthening ribbons or strengthening ribs, e.g. strengthening ribs corresponding to the strengthening ribbons 96 and 98, respectively, shown in Fig. 6, or the strengthening ribs 52 shown in Fig. 4. One of the two halves or both halves of the filter element may furthermore be provided with projecting, flap-shaped parts or flanges corresponding to the flap-shaped parts or flanges shown in Figs. 1-3 or in Fig. 5, and the seventh embodiment of the filter element according to the present invention shown in Figs. 9 and 10 may be prepared from two different foil sheets or two identical foil sheets.

Fig. 11 shows an eighth embodiment of a filter element according to the present invention, said eigth embodiment being designated the reference numeral 160 in its entirety. The filter element 160 comprises two foils 162 and 164 being joined together or welded together by way of joints or welds 166-169 corresponding to the joints or welds 22-25, respectively, shown in Fig. 1 and described above.

Unlike the first embodiment of the filter element according to the present invention shown in Fig. 1 the eighth embodiment of the filter element according to the present invention shown in Fig. 11 lacks projecting, flap-shaped catch flanges corresponding to the flanges 16 and 18 shown in Fig. 1. A tubular part 170 defined by the joints or welds 167 and 169 and corresponding to the tubular part 20 shown in Fig. 1 is used as a catch-flange when emptying the filter element after use thereof.

The embodiment shown in Fig. 11 further illustrates specific feature that the filter element is a "universal" filter element, i.e. a filter element to be used in a filter holder or filter funnel of arbitrary size, as the filter element is prepared in a large size, whereupon the user may adapt the filter element to the size of his or her filter holder or filter funnel by cutting the filter element 160 along a cutting line corresponding to the size of the filter holder or filter funnel in question. Fig. 11 shows two such cutting lines being designated the reference numerals 171 and 172, respectively.

Like the above described embodiments of a filter element according to the present invention, the eigth embodiment of the filter element according to the invention shown in Fig. 11 may be prepared from paper material or preferably polymeric material, i.e. be prepared from a material enabling the filter element to be reused several times.

An alternative or ninth embodiment of a filter element according to to the present invention is shown in Fig. 12, said ninth embodiment being designated the reference numeral 180 in its entirety. The ninth embodiment 180 shown in Fig. 12 comprises two foils 182 and 184 joined together through a single joint or weld 186 just like the second embodiment of the filter element according to the invention shown in Fig. 4. Thus, the filter element 180 forms a filter element being of a basically triangular configuration corresponding to a conventional disposable coffee filter prepared from paper material

Unlike the conventional disposable coffee filter which lacks a projecting flap-shaped part enabling the handling and cleaning of the filter element after use, the ninth embodiment shown in Fig. 12 has a projecting, flap-shaped part 190 enabling the person preparing an extraction drink, preferably coffee, by means of the filter element 180, e.g. in a conventional coffee urn, to grip and in a safe way hold the filter element 180 immediately after use without risk of burning himself or herself on the filter element or the material contained in the filter element, such as coffee beans, to which boiling water has been added a short time ago, and which therefore after preparing the extraction drink will be very hot.

Like the above described embodiments of the filter element according to the present invention the ninth embodiment of the filter element according to the present invention shown in Fig. 12 may be prepared from paper or polymeric material and furthermore be prepared from two different foil materials or one and the same foil material. One of the foils or both foils may be fluid- permeable and furthermore be provided with strengthening ribs, e.g. strengthening ribs corresponding to the strengthening ribs 52 shown in fig. 4, or strengthening ribbons corresponding to the strengthening ribbons 96 and 98 shown in fig. 6.

Fig. 13 shows a tenth embodiment of the filter element according to the present invention said thenth embodiment being designated the reference numeral 200 in its entirety. The tenth embodiment of the filter element according to the present invention shown in fig. 13 so to speak constitutes a combination of the above described embodiments of the filter element according to the present invention shown in Figs. 4 and 5. Thus, the filter element 200 comprises two foils 202 and 204, which like the second embodiment of the filter element according to the present invention shown in Fig. 4 are joined together through a single joint or weld 212 serving the purpose of increasing the stiffness of the filter element. From the uppermost edge of the filter element 200 smaller, asymmetrically placed flanges 206 and 208 extend upwardly corresponding to the flanges 66 and 68 discussed above with reference to Fig. 5, which flanges themselves correspond to flanges provided in a conventional disposable coffee filter prepared from paper material. From the lowermost part of the filter element 200 a flap-shaped part 210 extends downwardly. The flap-shaped part 210 furthermore has a through-going hole 211 to be used for hanging-up the filter element after use and cleaning.

The tenth embodiment of the filter element according to the present invention shown in Fig. 13 may of course be modified in numerous ways. Thus, corresponding to the fourth embodiment shown in Fig. 6, strengthening ribbons corresponding to the strengthening ribbons 96 and 98 shown in fig. 6 may be provided, or corresponding to the second embodiment shown in Fig. 4, strengthening ribs corresponding to the strengthening ribs 52 shown in Fig. 4 may be provided.

It is further to be pointed out that the above described embodiments may be combined in numerous ways being obvious for a person skilled in the art, as features or characterizing parts may be deduced from one of the above embodiments and be incorporated in another of the above embodiments.

### Example 1

A filter element having the form shown in fig. 1-3 was prepared from two sheets of non-woven polypropylene forming a non-woven material being scatteredly, thermally bonded. Said material is marketed by the firm Fiberweb Sweden AB, Box 193, S-601 Norrköping, Sweden under the name Holmestra Non-woven® and is characterized by suppliers as a material being "Spunbound polypropylene, non-woven fabric, thermally bonded". The two sheets had a grammage of 50 g/m². According to the supplier each sheet had a thickness of 0.42 mm. A number of samples of the embodiment of the filter element according to the invention shown in Fig. 1 were made from the sheets. The individual filter element had the following dimensions. The tubular part 20 had a length of 14.2 cm and a width of 2.8 cm. The heigth of the filter element was 11.7 cm, and the largest width of the filter body of the filter element was 18 cm. The width of the joints 22-25 was about 1 mm. The flap-shaped catch flanges or parts 16 and 18 had a width of 2.8 cm and a heigth of 2.8 cm.

The individual filter element was prepared in the following way by using a manually operated press. On an insulating silicone rubber-foil a first Teflon® cloth was placed and on top of this two sheets of the above foil material were placed. On top of these sheets a second heat transmitting Teflon® cloth was placed. A heated aluminium matrix was then pressed against the upper side of the heat transmitting Teflon® cloth by way of the manually operated press, said aluminium press was previously heated to a temperature of about 230°C and was pressed against the adjacent material, i.e. the two material foils bedded between the silicone rubber-isolator and the first Teflon® cloth and the second heat-transmitting Teflon cloth® at a pressure of about 1 ton and kept in this position for 2-6 seconds.

Tests indicated that an increase in temperature and pressure made a reduction in pressing time possible. The used press tool, i.e. the preheated aluminium matrix gave a ribbon-shaped weld of the two sheets of material on those sites where the sheets were contacted with the preheated embossing tool through the heat-transmitting Teflon® cloth. The press tool had an edge which gave a notch effect making possible a subsequent separation of the prepared filter element from the remaining foil material. Said effect is discussed above with reference to Fig. 7.

The filter element thus prepared were used for brewing coffee on conventional domestic coffee urns and maintained the filtration property as well as the original mechanical strenght by repeated daily use within a period of two weeks. The coffee brewed by means of the filter element thus prepared tasted excellent without any after-taste or other false taste.

### Example 2

In stead of the non-woven polypropylene material used above in example 1 a stronger or ligther quality of material than the above, e.g. a non-woven polypropylene foil having a grammage between 15 g/m² and 150 g/m², or a combination of foils of different strength, may be used.

Alternatively, non-woven Nylon®, non-woven polyester or melt-blown cloth may be used, said products being marketed by the above Swedish supplier. Numerous other filter cloths based on polymeric material may presumably be used in connection with the filter element according to the present invention, including combinations of such filter materials. The above Swedish supplier markets such a composite material comprising non-woven polypropylene, melt-blown polypropylene and non-woven polypropylene forming a three-layer structure.

The used foil material may be dyed to eliminate the risk that the filter element appears less attractive to user due to discoloration after usage for a prolonged period of time.

## Claims

1. A filter element (10, 60, 80, 130, 160) to be used in the preparation of extraction drinks and prepared from fluid-permeable foil material, said filter element (10, 60, 80, 130, 160) comprising a filter body of essentially conical form and being open at the widest end of said filter body, said filter element (10, 60, 80, 130, 160) being designed to be received within and supported by a funnel-shaped holder (30), characterized in that said filter element (10, 60, 80, 130, 160) comprises a flap-shaped part (20, 70, 90, 134, 170) projecting from said filter body, and constituting an extension of said filter body at the end of said filter body being opposite said widest end, said flap-shaped part (20, 70, 90, 134, 170) constituting a tubular or funnel-shaped part being open at both ends, and said flap-shaped part (20, 70, 90, 134, 170) having dimensions so that a person after using said filter element (10, 60, 80, 130, 160) may grip said flap-shaped part (20, 70, 90, 134, 170) and in a safe manner hold said filter element when it is removed from said funnel-shaped holder (30).

2. The filter element according to claim 1, further comprising a flap-shaped part (16, 18, 66, 68, 86, 88) projecting from said filter body at the widest end of said filter body.

3. The filter element according to claim 2, comprising two, preferably symmetrically placed, flap-shaped parts (16, 18, 66, 68, 86, 88) projecting from said filter body at the widest end of said filter body.

4. The filter element according to any of claims 1-3, said tubular or funnel-shaped part having a length or height being larger that the height of said filter body.

5. The filter element according to any of claims 1-4, said filter element (10, 60, 80, 130, 160) being collapsible, and forming in a collapsed state a basically planar structure.

6. The filter element according to claim 5, said filter element being composed of two pieces of sheet material (12, 14, 62, 64, 82, 84, 100, 102, 162, 164), at least one of said pieces of sheet material being of a fluid-permeable material, and said pieces of sheet material (12, 14, 62, 64, 82, 84, 100, 102, 162, 164) being joined together along a part of the edges of said pieces of sheet material.

7. The filter element according to claim 6, said two pieces of sheet material (12, 14, 62, 64, 82, 84, 100, 102, 162, 164) constituting pieces of the same material.

8. The filter element according to claim 6 or 7, said pieces of sheet material (12, 14, 62, 64, 82, 84, 100, 102, 162, 164) being made of paper material.

9. The filter element according to claim 6 or 7, said pieces of sheet material (12, 14, 62, 64, 82, 84, 100, 102, 162, 164) being made of non-woven plastics or polymeric material or melt-blown plastics or polymeric material.

10. The filter element according to any of the claims 6-9, said edge joints serving to increase the stiffness of the filter element.

11. The filter element according to any of the preceeding claims, further comprising strengthening ribs or strengthening ribbons serving to increase the stiffness of the filter body.

## Patentansprüche

1. Filterelement (10, 60, 80, 130, 160) zur Verwendung für die Zubereitung von Extraktionsgetränken, das aus einem flüssigkeitsdurchlässigem Folienmaterial hergestellt ist, wobei das Filterelement (10, 60, 80, 130, 160) einen Filterkörper mit im wesentlichen konischer Form aufweist und an dem breitesten Ende des Filterkörpers geöffnet ist, und das Filterelement (10, 60, 80, 130, 160) so geformt ist, daß es in einen trichterförmigen Halter (30) einsetzbar ist und von diesem gehalten werden kann, dadurch gekennzeichnet, daß
das Filterelement (10, 60, 80, 130, 160) einen am Filterkörper hervorspringenden, klappenförmig ausgebildeten Teil (20, 70, 90, 134, 170) aufweist, der an dem Ende des Filterkörpers, das dem breitesten Ende des Filterkörpers gegenüberliegt, eine Verlängerung des Filterkörpers bildet, der klappenförmig ausgebildete Teil (20, 70, 90, 134, 170) einen an beiden Seiten offenen, röhrenförmigen oder trichterförmigen Teil bildet, und der klappenförmig ausgebildete Teil (20, 70, 90, 134, 170) derart dimensioniert ist, daß eine Person nach Benutzung des Filterelements (10, 60, 80, 130, 160) den klappenförmig ausgebildeten Teil (20, 70, 90, 134, 170) zu greifen vermag und auf einer sicheren Weise das aus dem trichterförmigen Halter (30) herausgenommene Filterelement zu halten vermag.

2. Filterelement nach Anspruch 1, das zusätzlich einen klappenförmig ausgebildeten Teil (16, 18, 66, 68, 86, 88) aufweist, der am breitesten Ende des Filterkörpers vom Filterkörper hervorspringt.

3. Filterelement nach Anspruch 2, das zwei, bevorzugt symmetrisch angeordnete, klappenförmig ausgebildete Teile (16, 18, 66, 68, 86, 88) aufweist, die am breitesten Ende des Filterkörpers vom Filterkörper hervorspringen.

4. Filterelement nach einem der Ansprüche 1 bis 3, dadurch gekennzeichnet, daß der röhrenförmige oder trichterförmige Teil eine Länge oder Höhe aufweist, die größer ist als die Höhe des Filterkörpers.

5. Filterelement nach einem der Ansprüche 1 bis 4, dadurch gekennzeichnet, daß das Filterelement (10, 60, 80, 130, 160) zusammenlegbar ist und in zusammengelegtem Zustand eine im wesentlichen ebene Anordnung bildet.

6. Filterelement nach Anspruch 5, dadurch gekennzeichnet, daß das Filterelement aus zwei Stücken eines blattförmigen Materials (12, 14, 62, 82, 84, 100, 102, 162, 164) zusammengesetzt ist, wenigstens eines der Stücke des blattförmigen Materials aus einem flüssigkeitsdurchlässigen Material hergestellt ist und die Stücke des blattförmigen Materials (12, 14, 62, 82, 84, 100, 102, 162, 164) entlang eines Teils der Kanten der Stücke des blattförmigen Materials miteinander verbunden sind.

7. Filterelement nach Anspruch 6, dadurch gekennzeichnet, daß die beiden Stücke des blattförmigen Materials (12, 14, 62, 82, 84, 100, 102, 162, 164) Stücke des gleichen Materials bilden.

8. Filterelement nach Anspruch 6 oder 7, dadurch gekennzeichent, daß die beiden Stücke des blattförmigen Materials (12, 14, 62, 82, 84, 100, 102, 162, 164) aus einem Papiermaterial hergestellt sind.

9. Filterelement nach Anspruch 6 oder 7, dadurch gekennzeichent, daß die beiden Stücke des blattförmigen Materials (12, 14, 62, 82, 84, 100, 102, 162, 164) hergestellt sind aus einem Vlies aus Plastik oder Polymermaterial oder aus schmelzgeblasenem Plastik oder Polymermaterial.

10. Filterelement nach einem der Anspüche 6 bis 9, dadurch gekennzeichent, daß die Kantenverbindungen zur Erhöhung der Steifigkeit des Filterelements dienen.

11. Filterelement nach einem der vorhergehenden Ansprüche, gekennzeichnet durch Verstärkungsrippen oder Verstärkungsbänder zur Erhöhung der Steifigkeit des Filterkörpers.

## Revendications

1. Elément filtrant (10, 60, 80, 130, 160) utilisé pour la préparation de boissons à base d'extraits, et préparé à partir d'un matériau en forme de feuille perméable aux fluides, cet élément filtrant (10, 60, 80, 130, 160) comprenant un corps de filtre de forme sensiblement conique et ouvert à l'extrémité la plus large du corps de filtre, cet élément filtrant (10, 60, 80, 130, 160) étant conçu pour être reçu à l'intérieur d'un support (30) en forme d'entonnoir et être supporté par celui-ci, caractérisé en ce que cet élément filtrant (10, 60, 80, 130, 160) comporte une partie (20, 70, 90, 134, 170) en forme de patte faisant saillie du corps de filtre, et constituant un prolongement du corps de filtre à l'extrémité du corps de filtre, qui est opposée à l'extrémité la plus large, cette partie (20, 70, 90, 134, 170) en forme de patte constituant une partie en forme d'entonnoir ou tubulaire, qui est ouverte à ses deux extrémités, et cette partie (20, 70, 90, 134, 170) en forme de patte ayant des dimensions telles qu'une personne, après avoir utilisé l'élément filtrant (10, 60, 80, 130, 160), peut prendre la partie (20, 70, 90, 134, 170) en forme de patte et tenir d'une manière sûre l'élément filtrant lorsqu'il est retiré du support (30) en forme d'entonnoir.

2. Elément filtrant suivant la revendication 1, comportant en outre une partie (16, 18, 66, 68, 86, 88) en forme de patte faisant saillie du corps de filtre à l'extrémité la plus large du corps de filtre.

3. Elément filtrant suivant la revendication 2, comprenant deux parties (16, 18, 66, 68, 86, 88) en forme de pattes, de préférence disposées symétriquement, qui font saillie du corps de filtre à l'extrémité la plus large du corps de filtre.

4. Elément filtrant suivant l'une quelconque des revendications 1 à 3, la partie en forme d'entonnoir ou tubulaire ayant une longueur ou une hauteur qui est plus grande que la hauteur du corps de filtre.

5. Elément filtrant suivant l'une quelconque des revendications 1 à 4, l'élément filtrant (10, 60, 80, 130, 160) pouvant s'affaisser et formant, à l'état affaissé, une structure fondamentalement plane.

6. Elément filtrant suivant la revendication 5, l'élément filtrant étant constitué de deux pièces de matériau (12, 14, 62, 64, 82, 84, 100, 102, 162, 164) en feuille, au moins l'une des pièces de matériau en feuille étant en un matériau perméable aux fluides, et les pièces de matériau (12, 14, 62, 64, 82, 84, 100, 102, 162, 164) en feuille étant jointes l'une à l'autre le long d'une partie des bords des pièces de matériau en feuille.

7. Elément filtrant suivant la revendication 6, les deux pièces de matériau (12, 14, 62, 64, 82, 84, 100, 102, 162, 164) en feuille constituant des pièces du même matériau.

8. Elément filtrant suivant la revendication 6 ou 7, les pièces de matériau (12, 14, 62, 64, 82, 84, 100, 102, 162, 164) en feuille étant réalisées en un même matériau de papier.

9. Elément filtre suivant la revendication 6 ou 7, les pièces de matériau (12, 14, 62, 64, 82, 84, 100, 102, 162, 164) en feuille étant réalisées à partir de matières plastiques non tissés ou de matériau polymère ou de matières plastiques soufflés-fondus ou de matériau polymère.

10. Elément filtre suivant l'une quelconque des revendications 6 à 9, les joints de bords servant à augmenter la rigidité de l'élément filtrant.

11. Elément filtre suivant l'une quelconque des revendications précédentes, comprenant en outre des nervures de renforcement ou des rubans de renforcement, qui servent à augmenter la raideur du corps de filtre.
